# EUROPEAN PATENT APPLICATION

(11) **EP 4 632 690 A1**
(43) Date of publication of application: **15.10.2025**
(21) Application number: 25167570.8
(22) Date of filing: 31.03.2025
(51) Int. Cl.: G06V 10/82, G06V 20/59

(54) **USING ARTIFICIAL INTELLIGENCE TO DETECT PASSENGERS IN A VEHICLE**

(30) Priority: 11.04.2024 US 202418632989
(71) Applicant: WAYMO LLC, Mountain View, CA 94043 (US)
(72) Inventor: CICEK, Bayram Safa, Mountain View, 94043 (US); YANG, Qichi, Mountain View, 94043 (US); LI, Pan, Mountain View, 94043 (US); ALSHARIF, Ouais, Mountain View, 94043 (US); AYVACI, Alper, Mountain View, 94043 (US); GUO, Zijan, Mountain View, 94043 (US)
(74) Representative: Anderson, Oliver Ben

(57) **Abstract**

The described aspects and implementations use artificial intelligence (AI) to detect passengers in a vehicle. A method of an implementation includes obtaining one or more images captured by one or more cameras of a vehicle. The method includes generating, using one or more artificial intelligence models and the one or more images, passenger data indicating locations of one or more passengers of the vehicle. The method includes generating, based on the passenger data, vehicle area data indicating one or more areas of the vehicle at which the one or more passengers are located. The method includes determining, based on the passenger data and the vehicle area data, whether at least one passenger seating configuration criterion is satisfied. The method includes, responsive to determining that such a criterion is satisfied, causing the vehicle to perform an action associated with a passenger seating configuration in the vehicle.

## Description

### TECHNICAL FIELD

The instant specification generally relates to vehicles. More specifically, the instant specification relates to using artificial intelligence to detect passengers in a vehicle.

### BACKGROUND

Vehicles-whether autonomous vehicles (AVs) (including fully autonomous or partially self-driving), vehicles operated by a human driver, or other types of vehicles-often operate by sensing an environment with various sensors (e.g., radar, optical, audio, humidity, etc.). This environment may include other objects in the environment, some of which are mobile. Such objects can include other vehicles, cyclists, pedestrians, animals, etc.

### BRIEF DESCRIPTION OF THE DRAWINGS

The present disclosure is illustrated by way of examples, and not by way of limitation, and can be more fully understood with references to the following detailed description when considered in connection with the figures, in which:
**FIG. 1** depicts a block diagram of an example autonomous vehicle (AV) capable of using artificial intelligence (AI) to detect passengers in a vehicle, in accordance with some implementations of the present disclosure.
**FIG. 2** depicts a flow diagram of an example method for using AI to detect passengers in a vehicle, in accordance with some implementations of the present disclosure.
**FIG. 3** depicts a block diagram of an example AI subsystem, in accordance with some implementations of the present disclosure.
**FIG. 4** depicts a top-down cutaway view of an example vehicle that uses AI to detect passengers in a vehicle, in accordance with some implementations of the present disclosure.
**FIG. 5** depicts a front view of a visual alert for using AI to detect passengers in a vehicle, in accordance with some implementations of the present disclosure.
**FIG. 6** depicts a block diagram of an example computer device capable of using AI to detect passengers in a vehicle, in accordance with some implementations of the present disclosure.

### SUMMARY

In one implementation, disclosed is a method for using artificial intelligence (AI) to detect passengers in a vehicle. The method includes obtaining one or more images captured by one or more cameras of a vehicle. The method includes generating, using one or more AI models and the one or more images, passenger data indicating locations of one or more passengers of the vehicle. The method includes generating, based on the passenger data, vehicle area data indicating one or more areas of the vehicle at which the one or more passengers are located. The method includes determining, based on the passenger data and the vehicle area data, whether at least one passenger seating configuration criterion is satisfied. The method includes, responsive to determining that the at least one passenger seating configuration criterion is satisfied, causing the vehicle to perform an action associated with a passenger seating configuration.

In another implementation, disclosed is a system for using AI to detect passengers in a vehicle. The system includes a memory and a processing device coupled to the memory. The processing devices is configured to perform one or more operations. The one or more operations include obtaining one or more images captured by one or more cameras of a vehicle. The one or more operations include generating, using one or more AI models and the one or more images, passenger data indicating locations of one or more passengers of the vehicle. The one or more operations include generating, based on the passenger data, vehicle area data indicating one or more areas of the vehicle at which the one or more passengers are located. The one or more operations include determining, based on the passenger data and the vehicle area data, whether at least one passenger seating configuration criterion is satisfied. The one or more operations include, responsive to determining that the at least one passenger seating configuration criterion is satisfied, causing the vehicle to perform an action associated with a passenger seating configuration in the vehicle.

Another aspect of the disclosure includes a non-transitory computer-readable medium storing instructions that, when executed by one or more processing devices, cause the one or more processing devices to perform one or more operations. The one or more operations include obtaining one or more images captured by one or more cameras of a vehicle. The one or more operations include generating, using one or more AI models and the one or more images, passenger data indicating locations of one or more passengers of the vehicle. The one or more operations include generating, based on the passenger data, vehicle area data indicating one or more areas of the vehicle at which the one or more passengers are located. The one or more operations include determining, based on the passenger data and the vehicle area data, whether at least one passenger seating configuration criterion is satisfied. The one or more operations include, responsive to determining that the at least one passenger seating configuration criterion is satisfied, causing the vehicle to perform an action associated with a passenger seating configuration in the vehicle.

### DETAILED DESCRIPTION

A vehicle, such as an autonomous vehicle (including a vehicle deploying various driving assistance features) (AV) or a vehicle operated by a human driver, can carry one or more passengers from a starting location to a destination. It is often unsafe for the vehicle to drive if one or more passengers are not properly seated. Some vehicles have weight sensors that can detect whether a passenger is sitting in a certain seat of the vehicle. Some vehicles have sensors that can detect whether a certain seatbelt is fastened. Using a combination of these sensors, a vehicle may be able to detect whether a passenger is seated in a seat of the vehicle without the passenger's seatbelt fastened.

One disadvantage of a vehicle using weight and seatbelt sensors is that they may not always accurately detect whether a passenger is properly seated in the vehicle. For example, a weight sensor may detect a heavy object in a seat, and the vehicle may erroneously determine that a person is sitting in that seat (a false positive). In another example, a weight sensor may fail to detect a person who weighs very little (e.g., a child) sitting in a seat of the vehicle (a false negative). In yet another example, the weight sensor may not detect when two people are sitting in the same seat of the vehicle or whether the passengers are located in other unsafe seating configurations.

Aspects and implementations of the present disclosure address these and other challenges of existing vehicles. In one implementation, a vehicle may include one or more cameras, which may be located at various locations of the vehicle (e.g., inside the vehicle, mounted to an exterior of the vehicle, etc.). The one or more cameras may capture images of various locations associated with the vehicle (e.g., an interior of the vehicle, an exterior of the vehicle, etc.). The vehicle may provide the captured image(s) as input for one or more artificial intelligence (AI) models. The AI model(s) may generate one or more outputs, including passenger data, based on the one or more captured images. The passenger data may indicate whether a passenger is present in the image and a location of the passenger. A vehicle area subsystem of the vehicle may obtain the passenger data and may generate vehicle area data. The vehicle area data may indicate an area of the vehicle where a detected passenger is located. The vehicle area data may indicate other information about the passenger (e.g., whether the passenger is a child, whether the passenger is smoking, etc.). A passenger seating subsystem of the vehicle may obtain the passenger location data and/or the vehicle area data and determine, based on the passenger location data and/or the vehicle area data, whether a passenger seating configuration criterion has been satisfied. The passenger seating configuration criterion may be based on one or more conditions such as multiple passengers being located in the same seat of the vehicle, a passenger being located in an area of the vehicle that is not a seat, or all of the passengers being children. Responsive to the passenger seating subsystem of the vehicle determining that the passenger seating configuration criterion has been satisfied, the passenger seating subsystem may cause the vehicle to perform one or more actions associated with a passenger seating configuration of the vehicle (e.g., produce an alert to notify the passenger(s) of the vehicle, prevent the vehicle from driving, etc.).

The advantages of the disclosed techniques and systems include, but are not limited to, reduced errors in vehicles detecting whether passengers are seated in a safe seating configuration. By using AI models and other computing processes to detect the locations of passengers, determine whether the passengers are seated in a proper seating configuration, and determine whether passengers comply with other seating practices, the false positives and false negatives discussed above are reduced, which results in improvements to driving technology. Furthermore, where the vehicle is an AV, the AV may automatically respond to one or more passengers not being seated in a proper seating configuration, for example, by preventing the AV from driving or by stopping the AV.

In some implementations, the vehicle can include an AV. In those instances where the description of implementations refers to AVs, it should be understood that similar techniques can be used in various driver assistance systems that do not rise to the level of fully autonomous driving systems. More specifically, disclosed techniques can be used in Society of Automotive Engineers (SAE) Level 2 driver assistance systems that implement steering, braking, acceleration, lane centering, adaptive cruise control, etc., as well as other driver support. Likewise, the disclosed techniques can be used in SAE Level 3 driving assistance systems capable of autonomous driving under limited (e.g., highway) conditions. In such systems, fast and accurate detection and tracking of mobile objects can be used to inform the driver of the approaching objects, with the driver making the ultimate driving decisions (e.g., in SAE Level 2 systems), or to make certain driving decisions (e.g., in SAE Level 3 systems), such as reducing speed, changing lanes, etc., without requesting driver's feedback. Furthermore, while the description of implementations refers to AVs, many subsystems, processes, and techniques are applicable to vehicles that are not AVs, such as human-operated vehicles. A vehicle may include a motor vehicle (car, truck, bus, motorcycle, all-terrain vehicle, recreational vehicle, any specialized farming or construction vehicle, and the like), an aircraft (plane, helicopter, drone, and the like), a naval vehicle (ship, boat, yacht, submarine, and the like), or any other self-propelled vehicle (e.g., robot, factory or warehouse robotic vehicle, sidewalk delivery robotic vehicle, etc.).

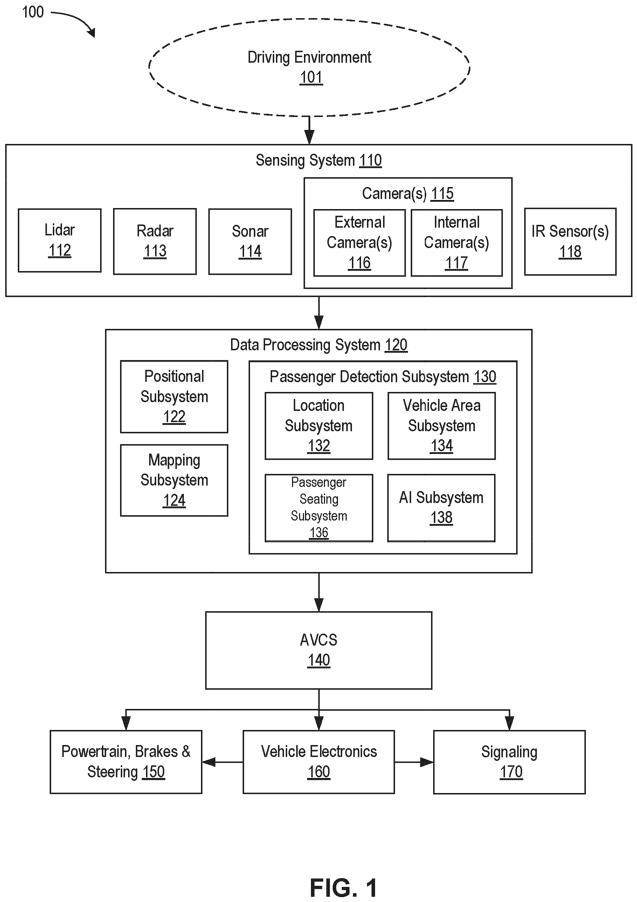

**FIG. 1** is a diagram illustrating components of an example AV 100 capable of using AI to detect passengers in a vehicle, in accordance with some implementations of the present disclosure. AVs 100 can include vehicles capable of being operated in a self-driving mode (without a human input or with a reduced human input).

An environment 101 around the AV 100 (sometimes referred to as the "driving environment") can include any objects (animated or non-animated) located outside the AV 100, such as roadways, buildings, trees, bushes, sidewalks, bridges, mountains, other vehicles, pedestrians, animals, and so on. The driving environment 101 can be urban, suburban, rural, and so on. In some implementations, the driving environment 101 can be an off-road environment (e.g., farming or other agricultural land). In some implementations, the driving environment can be an indoor environment, (e.g., the environment of an industrial plant, a shipping warehouse, a hazardous area of a building, and so on). In some implementations, the driving environment 101 can be substantially flat, with various objects moving parallel to a surface (e.g., parallel to the surface of the Earth). In other implementations, the driving environment 101 can be three-dimensional and can include objects that are capable of moving along all three directions (e.g., balloons, leaves, etc.). Hereinafter, the term "driving environment" should be understood to include all environments in which an autonomous motion of self-propelled vehicles can occur. For example, the "driving environment" can include any possible flying environment of an aircraft or a marine environment of a naval vessel. The objects of the driving environment 101 can be located at any distance from the AV 100, from close distances of several feet (or less) to several miles (or more).

As described herein, in a semi-autonomous or partially autonomous driving mode, even though the AV 100 assists with one or more driving operations (e.g., steering, braking and/or accelerating to perform lane centering, adaptive cruise control, advanced driver assistance systems (ADAS), or emergency braking), the human driver is expected to be situationally aware of the AV's 100 surroundings and supervise the assisted driving operations. Here, even though the AV 100 may perform all driving tasks in certain situations, the human driver is expected to be responsible for taking control as needed.

Although, for brevity and conciseness, various systems and methods may be described below in conjunction with AVs 100, similar techniques can be used in various driver assistance systems that do not rise to the level of fully autonomous driving systems. In the United States, the SAE have defined different levels of automated driving operations to indicate how much, or how little, a vehicle controls the driving, although different organizations, in the United States or in other countries, may categorize the levels differently. More specifically, disclosed systems and methods can be used in SAE Level 2 (L2) driver assistance systems that implement steering, braking, acceleration, lane centering, adaptive cruise control, etc., as well as other driver support. The disclosed systems and methods can be used in SAE Level 3 (L3) driving assistance systems capable of autonomous driving under limited (e.g., highway) conditions. Likewise, the disclosed systems and methods can be used in vehicles that use SAE Level 4 (L4) self-driving systems that operate autonomously under most regular driving situations and require only occasional attention of the human operator. In all such driving assistance systems, accurate lane estimation can be performed automatically without a driver input or control (e.g., while the vehicle is in motion) and result in improved reliability of vehicle positioning and navigation and the overall safety of autonomous, semi-autonomous, and other driver assistance systems. As previously noted, in addition to the way in which SAE categorizes levels of automated driving operations, other organizations, in the United States or in other countries, may categorize levels of automated driving operations differently. Without limitation, the disclosed systems and methods herein can be used in driving assistance systems defined by these other organizations' levels of automated driving operations.

The example AV 100 can include a sensing system 110. The sensing system 110 can include various electromagnetic (e.g., optical) and non-electromagnetic (e.g., acoustic) sensing subsystems and/or devices. The sensing system 110 can include one or more lidars 112, which can be a laser-based unit capable of determining distances to the objects and velocities of the objects in the driving environment 101. A lidar 112 can include one or more light sources producing and emitting signals and one or more detectors of the signals reflected back from the objects. In some implementations, a lidar 112 can perform a 360-degree scan in a horizontal direction. In some implementations, a lidar 112 can be capable of spatial scanning along both the horizontal and vertical directions. In some implementations, the field of view can be up to 90 degrees in the vertical direction (e.g., with at least a part of the region above the horizon being scanned with radar signals). In some implementations, the field of view can be a full sphere (consisting of two hemispheres).

The sensing system 110 can include one or more radars 113, which can be any system that utilizes radio or microwave frequency signals to sense objects within the driving environment 101 of the AV 100. The radar 113 can be configured to sense both the spatial locations of the objects (including their spatial dimensions) and velocities of the objects (e.g., using Doppler shift technology). Hereinafter, "velocity" refers to both how fast the object is moving (the speed of the object) as well as the direction of the object's motion. Each of the lidar 112 and radar 113 can include a coherent sensor, such as a frequency-modulated continuous-wave (FMCW) lidar or radar sensor. For example, the radar 113 can use heterodyne detection for velocity determination. In some implementations, the functionality of a ToF and coherent radar is combined into a radar unit capable of simultaneously determining both the distance to and the radial velocity of the reflecting object. Such a unit can be configured to operate in an incoherent sensing mode (ToF mode) and/or a coherent sensing mode (e.g., a mode that uses heterodyne detection) or both modes at the same time. In some implementations, multiple lidars 112 or radars 113 can be mounted on the AV 100. The sensing system 110 can further include one or more sonars 114, which can be ultrasonic sonars, in some implementations.

In some implementations, the sensing system 110 can further include one or more cameras 115 configured to capture images. The cameras 115 may include one or more external cameras 116. An external camera 116 may be mounted on the AV 100 and may be positioned to capture images of the driving environment 101. The cameras 115 may include one or more internal cameras 117. An internal camera 117 may be mounted on the AV 100 and may be positioned to capture images of an interior portion of the AV 100. An interior portion of the AV 100 may include a portion of the AV 100 inside the body of the AV 100 where one or more passengers can move about, sit, stand, store objects, or perform other activities. In some implementations, a camera 115 (whether external 116 or internal 117) may be mounted on an exterior portion of the AV 100 (e.g., on the roof, on a side of the vehicle, on a rear of the vehicle, etc.). In some implementations, a camera 115 (whether external 116 or internal 117) may be mounted on an interior portion of the AV 100 (e.g., on the underside of the roof, on a wall, on an interior portion of the windshield, etc.).

In one or more implementations, the images captured by a camera 115 can be two-dimensional projections of an area in view of the camera's 115 lens (e.g., a portion of the driving environment 101, a portion of the interior of the AV 100) onto a projecting surface (flat or non-flat) of the camera 115. Some of the cameras 115 of the sensing system 110 can be video cameras configured to capture a continuous (or quasi-continuous) stream of images. The sensing system 110 can also include one or more infrared (IR) sensors 119.

The AV 100 can include a data processing system 120. The data processing system 120 may include one or more computers or computing devices. The data processing system 120 may include hardware or software that receives data from the sensing system 110, processes the received data, and determines how the AV 100 should operate in the driving environment 101. In some implementations, the data processing system 120 can receive non-electromagnetic data, such as audio data (e.g., ultrasonic sensor data, or data from a microphone picking up emergency vehicle sirens), temperature sensor data, humidity sensor data, pressure sensor data, meteorological data (e.g., wind speed and direction, precipitation data), and the like.

The data processing system 120 can include a positioning subsystem 122. The positioning subsystem 122 uses positioning data (e.g., global positioning system (GPS) data, inertial measurement unit (IMU) data, or other positioning data) to help accurately determine the location of the AV 100. The data processing system 120 may include a mapping subsystem 124. The mapping subsystem 124 may obtain or calculate map data (e.g., GPS data, geographic information systems (GIS) data, satellite data, traffic data, or other data) that may provide map information to the AV 100. In some implementations, the AV 100 may receive the positioning data or map data over a data network (e.g., a cellular network) from one or more servers. As such, the AV 100 may store temporary positioning data or map data, e.g., data relevant to the geographic area where the AV 100 is located.

The data processing system 120 can include a passenger detection subsystem 130. The passenger detection subsystem 130 may detect one or more passengers of the AV 100, determine whether the one or more passengers are seated in a proper configuration, determine other information about the passengers, and generate an output usable by the AV control system (AVCS) 140 and other systems of the AV 100, as discussed herein.

The passenger detection subsystem 130 may include a location subsystem 132. The location subsystem may determine one or more locations of one or more passengers of the AV 100, as discussed herein. The passenger detection subsystem 130 may include a vehicle area subsystem 134. The vehicle area subsystem 134 may determine one or more areas of the AV 100 at which one or more passengers are located, as discussed herein. The passenger detection subsystem 130 may include an passenger seating subsystem 136. The passenger seating subsystem 136 may determine, based on data generated or output by the location subsystem 132 or the vehicle area subsystem 134, whether a passenger seating configuration criterion is satisfied (e.g., a passenger is not in a proper seating configuration), and if so, the passenger seating subsystem 136 may send data to the AVCS 140 or other systems of the 100, as discussed herein. In some implementations, the passenger detection subsystem 130 may include an AI subsystem 138. The AI subsystem 138 may include one or more AI models that the location subsystem 132, the vehicle area subsystem 134, or the passenger seating subsystem 136 may use to perform various operations, as discussed herein.

The data processed or generated by the data processing system 120, including the passenger detection subsystem 130, can be used by the AVCS 140 of the AV 100. The AVCS 140 can include one or more algorithms that plan how the AV 100 is to behave in various driving situations and environments. For example, the AVCS 140 can include a navigation system for determining a global driving route to a destination point. The AVCS 140 can also include a driving path selection system for selecting a particular path through the immediate driving environment 101, which can include selecting a traffic lane, negotiating traffic congestion, choosing a place to make a U-turn, selecting a trajectory for a parking maneuver, and so on. The AVCS 140 can also include an obstacle avoidance system for safe avoidance of various objects or other obstructions (rocks, stalled vehicles, a jaywalking pedestrian, and so on) within the driving environment 101 of the AV 100. The obstacle avoidance system can be configured to evaluate the size of the obstacles and the trajectories of the obstacles (if obstacles are animated) and select an optimal driving strategy (e.g., braking, steering, accelerating, etc.) for avoiding the obstacles. The AVCS 140 can also include a system that, responsive to receiving an indication from the passenger detection subsystem 130 that a passenger is not in a proper seating configuration, prevents the AV 100 from driving or causes the AV 100 to come to a stop.

Algorithms and modules of the AVCS 140 can generate control outputs for use by various systems and components of the AV 100, such as the powertrain, brakes, and steering 150, vehicle electronics 160, signaling 170, and other systems and components not explicitly shown in **FIG. 1****.** These systems and components may modify the operations of the AV 100 based on the control output. The powertrain, brakes, and steering 150 can include an engine (internal combustion engine, electric engine, and so on), transmission, differentials, axles, wheels, steering mechanism, and other systems. The vehicle electronics 160 can include an on-board computer, engine management, ignition, communication systems, carputers, telematics, in-car entertainment systems, and other systems and components. The signaling 170 can include high and low headlights, stopping lights, turning and backing lights, horns and alarms, an inside lighting system, a dashboard notification system, a passenger notification system, radio and wireless network transmission systems, and so on. Some of the instructions output by the AVCS 140 can be delivered directly to the powertrain, brakes, and steering 150 (or signaling 170) whereas other instructions output by the AVCS 140 are first delivered to the vehicle electronics 160, which generates commands to the powertrain, brakes, and steering 150 and/or signaling 170.

In one example, the AVCS 140 can determine that an obstacle identified by the data processing system 120 is to be avoided by decelerating the vehicle until a safe speed is reached, followed by steering the vehicle around the obstacle. The AVCS 140 can output instructions to the powertrain, brakes, and steering 150 (directly or via the vehicle electronics 160) to: (1) reduce, by modifying the throttle settings, a flow of fuel to the engine to decrease the engine rpm; (2) downshift, via an automatic transmission, the drivetrain into a lower gear; (3) engage a brake unit to reduce (while acting in concert with the engine and the transmission) the vehicle's speed until a safe speed is reached; and (4) perform, using a power steering mechanism, a steering maneuver until the obstacle is safely bypassed. Subsequently, the AVCS 140 can output instructions to the powertrain, brakes, and steering 150 to resume the previous speed settings of the vehicle.

As used herein, the term "object" or "objects" can include any entity, item, device, body, or article (animate or inanimate) located outside the AV 100, such as other vehicles, cyclists, pedestrians, animals, roadways, buildings, trees, bushes, sidewalks, bridges, mountains, piers, banks, landing strips, or other things.

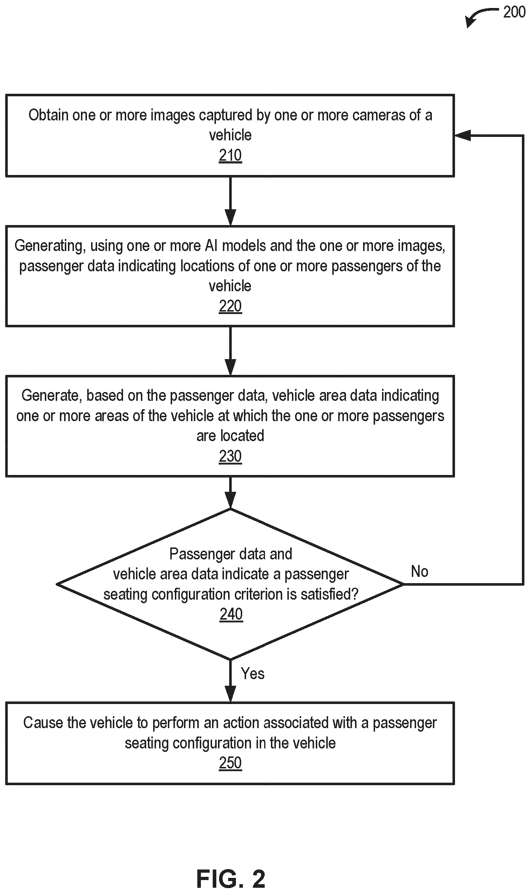

**FIG. 2** is a flowchart illustrating one embodiment of a method 200 for using artificial intelligence to detect passengers in a vehicle, in accordance with some implementations of the present disclosure. A processing device, having one or more central processing units (CPU(s)), one or more graphics processing units (GPU(s)), and/or memory devices communicatively coupled to the CPU(s) and/or GPU(s), can perform the method 200 and/or each of their individual functions, routines, subroutines, or operations. The processing device can include processing logic that may include hardware, software, or a combination of both. The method 200 can be directed to systems and components of a vehicle. In some implementations, the vehicle can be an autonomous vehicle (AV), such as AV 100 of **FIG. 1****.** In some implementations, the vehicle can be a driver-operated vehicle equipped with driver assistance systems, e.g., Level 2 or Level 3 driver assistance systems, that provide limited assistance with specific vehicle systems (e.g., steering, braking, acceleration, etc. systems) or under limited driving conditions (e.g., highway driving). The method 200 can be used to improve performance of the AVCS 140. In certain implementations, a single processing thread can perform the method 200. Alternatively, two or more processing threads can perform the method 200, each thread executing one or more individual functions, routines, subroutines, or operations of the method 200. In an illustrative example, the processing threads implementing the method 200 can be synchronized (e.g., using semaphores, critical sections, and/or other thread synchronization mechanisms). Alternatively, the processing threads implementing the method 200 can be executed asynchronously with respect to each other. Various operations of the method 200 can be performed in a different (e.g., reversed) order compared with the order shown in **FIG. 2****.** Some operations of the method 200 can be performed concurrently with other operations. Some operations can be optional. In some implementations, the passenger detection subsystem 130 may perform one or more operations of the method 200.

At block 210, processing logic obtains one or more images captured by one or more cameras of a vehicle. The vehicle may include the AV 100. The one or more cameras may include the one or more cameras 115. In one implementation, the one or more images captured by the one or more cameras 115 may include one or more images of the interior portion of the AV 100.

In some implementations, the one or more cameras 115 may represent a single camera. In other implementations, the one or more cameras 115 may represent multiple cameras 115. Where multiple cameras 115 are used, the cameras 115 may be positioned in, on, or around the AV 100 such that the passenger detection subsystem 130 may generate a panoramic image from the multiple images obtained from the multiple cameras 115. The multiple images may have been captured by the cameras 115 at the same time or near the same time. The panoramic image may include an image composed of portions of the multiple images stitched together. The passenger detection subsystem 130 may use software (such as photography software) to join the multiple images together into the panoramic image. In some implementations, the sensing system 110 may provide the one or more images (which may include the panoramic image) to the passenger detection subsystem 130.

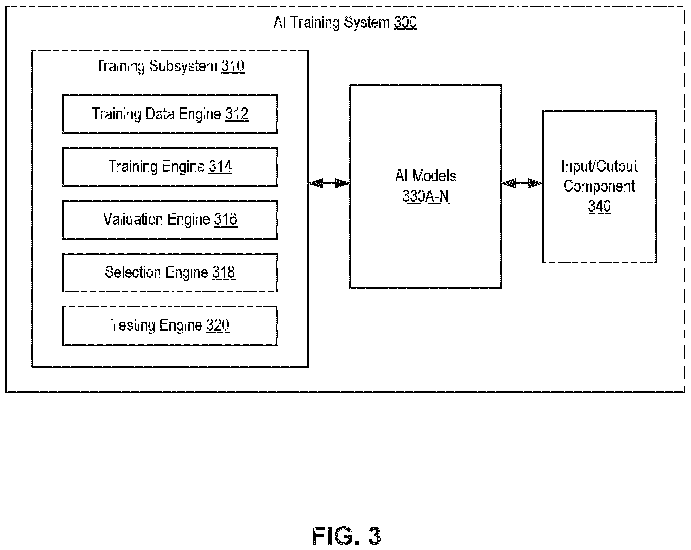

At block 220, processing logic generates passenger data (e.g., using the location subsystem 132). The passenger data may indicate one or more locations of one or more passengers of the vehicle. The processing logic may use one or more AI models and the one or more images. The one or more AI models may use the one or more images as input. The one or more AI models may include one or more AI models of the AI subsystem 138. In one embodiment, the one or more AI models are trained using an AI training system, which is described in more details below in conjunction with **FIG. 3****.**

**FIG. 3** depicts one embodiment of an AI training system 300 in accordance with implementations of the present disclosure. As illustrated in **FIG. 3****,** the AI training system 300 can include a training subsystem 310, which may include a training data engine 312, a training engine 314, a validation engine 316, a selection engine 318, or a testing engine 320. The AI training system 300 may include one or more AI models 330A-N. The AI training system 300 may include an input/output component 340.

In one embodiment, an AI model 330A-N may include one or more artificial neural networks (ANNs), decision trees, random forests, support vector machines (SVMs), clustering-based models, Bayesian networks, or other types of machine learning models. ANNs generally include a feature representation component with a classifier or regression layers that map features to a target output space. The ANN can include multiple nodes ("neurons") arranged in one or more layers, and a neuron may be connected to one or more neurons via one or more edges ("synapses"). The synapses may perpetuate a signal from one neuron to another, and a weight, bias, or other configuration of a neuron or synapse may adjust a value of the signal. Training the ANN may include adjusting the weights or other features of the ANN based on an output produced by the ANN during training.

An ANN may include, for example, a convolutional neural network (CNN), recurrent neural network (RNN), or a deep neural network. A CNN, a specific type of ANN, hosts multiple layers of convolutional filters. Pooling is performed, and non-linearities may be addressed, at lower layers, on top of which a multi-layer perceptron is commonly appended, mapping top layer features extracted by the convolutional layers to decisions (e.g., classification outputs). A deep network may include an ANN with multiple hidden layers or a shallow network with zero or a few (e.g., 1-2) hidden layers. Deep learning is a class of machine learning algorithms that use a cascade of multiple layers of nonlinear processing units for feature extraction and transformation. Each successive layer uses the output from the previous layer as input. An RNN is a type of ANN that includes a memory to enable the ANN to capture temporal dependencies. An RNN is able to learn input-output mappings that depend on both a current input and past inputs. The RNN will address past and future measurements and make predictions based on this continuous measurement information. One type of RNN that may be used is a long short term memory (LSTM) neural network.

ANNs may learn in a supervised (e.g., classification) or unsupervised (e.g., pattern analysis) manner. Some ANNs (e.g., such as deep neural networks) may include a hierarchy of layers, where the different layers learn different levels of representations that correspond to different levels of abstraction. In deep learning, each level learns to transform its input data into a slightly more abstract and composite representation.

In one or more embodiments, an AI model 330A-N may include a multi-modal generative AI model 330A-N, a transformer-based AI model 330A-N, or another type of AI model 330A-N. The AI model 330A-N may include generative capabilities, which may include the ability to generate new, original data. The AI model 330A-N may include discriminative capabilities, which may include the ability to make predictions based on existing data patterns. A multi-model AI model 330A-N may include an AI model 330A-N that can accept multiples forms of data as input and/or may generate multiples forms as output (e.g., text data, image data, video data, audio data, etc.).

In some embodiments, a large multi-model generative AI model 330A-N can leverage its world knowledge in zero shot detection. Since the generative AI model 330A-N may receive input data via a prompt that includes text, the detection set may be arbitrarily large (e.g., the input data is not limited to a fixed set of objects), which can add to the discriminate capabilities of the AI models 330A-N.

In one embodiment, a generative AI model can deviate from a machine learning model based on the generative AI model's ability to generate new, original data, rather than making predictions based on existing data patterns. A generative AI model can include a generative adversarial network (GAN), a variational autoencoder (VAE), or a large language model (LLM). In some instances, a generative AI model can employ a different approach to training or learning the underlying probability distribution of training data, compared to some machine learning models. For instance, a GAN can include a generator network and a discriminator network. The generator network attempts to produce synthetic data samples that are indistinguishable from real data, while the discriminator network seeks to correctly classify between real and fake samples. Through this iterative adversarial process, the generator network can gradually improve its ability to generate increasingly realistic and diverse data.

Generative AI models also have the ability to capture and learn complex, high-dimensional structures of data. One aim of generative AI models is to model underlying data distribution, allowing them to generate new data points that possess the same characteristics as training data. Some machine learning models (e.g., that are not generative AI models) focus on optimizing specific prediction of tasks.

In some embodiments, an AI model 330A-N may be trained on a corpus of data. In some embodiments, the AI model 330A-N can be a model that is first pre-trained on a corpus of data to create a foundational model, and afterwards fine-tuned on more data pertaining to a particular set of tasks to create a more task-specific, or targeted, model. The foundational model can first be pre-trained using a corpus of data that can include data in the public domain, licensed content, and/or proprietary content. Such a pre-training can be used by the AI model 330A-N to learn broad elements including, image or speech recognition, general sentence structure, common phrases, vocabulary, natural language structure, and other elements. In some embodiments, this first, foundational model can be trained using self-supervision, or unsupervised training on such datasets.

In some embodiments, the second portion of training, including fine-tuning, may be unsupervised, supervised, reinforced, or any other type of training. In some embodiments, this second portion of training may include some elements of supervision, including learning techniques incorporating human or machine-generated feedback, undergoing training according to a set of guidelines, or training on a previously labeled set of data, etc. In a non-limiting example associated with reinforcement learning, the outputs of the AI model 330A-N while training may be ranked by a user, according to a variety of factors, including accuracy, helpfulness, veracity, acceptability, or any other metric useful in the fine-tuning portion of training. In this manner, the AI model 330A-N can learn to favor these and any other factors relevant to users when generating a response. Further details regarding training are provided below.

In some embodiments, the AI model 330A-N may include one or more pre-trained models, or fine-tuned models. In a non-limiting example, in some embodiments, the goal of the "fine-tuning" may be accomplished with a second, or third, or any number of additional models. For example, the outputs of the pre-trained model may be input into a second AI model that has been trained in a similar manner as the "fine-tuned" portion of training above. In such a way, two more AI models may accomplish work similar to one model that has been pre-trained, and then fine-tuned.

In one implementation, the training subsystem 310 may manage the training and testing of an AI model 330A-N. The training data engine 312 may generate training data (e.g., a set of training inputs and a set of target outputs) to train the AI model 330A-N. In an illustrative example, the training data engine 312 can initialize a training set T to null (e.g., {}). The training data engine 312 can obtain data to be added to the training set T. In the present disclosure, in some implementations, a piece of training data may include an image and a ground truth. The image may include an image of a portion of an AV 100 (e.g., an interior portion), which may or may not include a passenger in the image. The ground truth associated with the image may include data indicating whether the image includes one or more passengers, data indicating one or more locations of the one or more passengers in the image (if the image includes at least one passenger), or other data. The training data engine 312 may add the training data to the training set T and may determine whether training set T is sufficient for training the AI model 330A-N. The training set T can be sufficient for training the AI model 330A-N if the training set T includes a threshold amount of training data, in some embodiments. In response to determining that the training set T is not sufficient for training, the training data engine 312 can identify or obtain additional pieces of training data. In response to determining that the training set T is sufficient for training, the training data engine 312 may provide the training set T to the training engine 314.

The training engine 314 can train the AI model 330A-N using the training data (e.g., training set T). The AI model 330A-N may refer to the model artifact that is created by the training engine 314 using the training data, where such training data can include training inputs and, in some implementations, corresponding target outputs (e.g., correct answers for respective training inputs). The training engine 314 can input the training data into the AI model 330A-N so that the AI model 330A-N may find patterns in the training data and configure itself based on those patterns.

Where an AI model 330A-N uses supervised learning, the training engine 314 may assist the AI model 330A-N in determining whether the AI model 330A-N maps the training input to the target output (the answer to be predicted). Where the AI model 330A-N uses unsupervised learning, the training engine 314 may input the training data into the AI model 330A-N. The AI model 330A-N may configure itself based on the input training data, but since the training data may not include a target output, the training engine 314 may not assist the AI model 330A-N in determining whether the AI model 330A-N provided a correct output during the training process.

The validation engine 316 may be capable of validating a trained AI model 330A-N using a corresponding set of features of a validation set from the training data engine 312. The validation engine 316 may determine an accuracy of each of the trained AI models 330A-N based on the corresponding sets of features of the validation set. Where the training data may not include a target output, validating a trained AI model 330A-N may include obtaining an output from the AI model 330A-N and providing the output to another entity for evaluation. The other entity may include another AI model configured to evaluation the output of the AI model that is undergoing training. The other entity may include a human. The validation engine 316 may discard a trained AI model 330A-N that has an accuracy that does not meet a threshold accuracy or that otherwise fails evaluation. In some embodiments, the selection engine 318 may be capable of selecting a trained AI model 330A-N that has an accuracy that meets a threshold accuracy. In some embodiments, the selection engine 318 may be capable of selecting the trained AI model that has the highest accuracy of multiple trained AI models 330A-N. In some implementations, the selection engine 318 may receive input from another AI model or a human and may select a trained AI model based on the input.

The testing engine 320 may be capable of testing a trained AI model 330A-N using a corresponding set of features of a testing set from the training data engine 312. For example, a first trained AI model 330A-N that was trained using a first set of features of the training set may be tested using the first set of features of the testing set. The testing engine 320 may determine a trained AI model 330A-N that has the highest accuracy or other evaluation of all of the trained AI models 330A-N based on the testing sets.

The input/output component 340 of the AI training system 300 may be configured to feed data as input to an AI model 330A-N and obtain one or more outputs. For example, the input/output component 340 may feed training data from the training engine 314 into one or more AI models 330A-N and obtain the respective AI models' 330A-N outputs. In another example, the input/output component 340 may feed a testing dataset into the one or more AI models 330A-N and obtain the respective AI models' 330A-N outputs.

As indicated above, in some embodiments, the AI model 330A-N can include a multi-modal generative AI model 330A-N. The AI model 330A-N can generate new content based on provided input data. The generative AI model 330A-N can be supported by a prompt subsystem (not shown), which may reside on the passenger detection subsystem 130 of FIG. 1. The prompt subsystem may enable a component of the passenger detection subsystem 130 to access the generative AI model 330A-N. The prompt subsystem may be configured to perform automated identification of, and facilitate retrieval of, relevant and timely contextual information for efficient and accurate processing of prompts by the generative AI model 330A-N. Communications between the prompt subsystem and a generative AI model 330A-N of the AI subsystem 138 may be facilitated by a generative model application programming interface (API), in some embodiments. In additional or alternative embodiments, the generative model API can translate prompts generated by the prompt subsystem into unstructured natural-language format and, conversely, translate responses received from the generative AI model 330A-N into any suitable form (e.g., including any structured proprietary format as may be used by the prompt subsystem). Similarly, the data management API can support instructions that may be used to communicate data requests to components of the passenger detection subsystem 130 and formats of data received from such components.

The prompt interface can support any suitable type of inputs (e.g., textual inputs, audio inputs, image inputs, etc.). The prompt interface may further support any suitable types of outputs (e.g., textual outputs, audio outputs, image outputs, etc.). In some embodiments, the prompt subsystem can include a prompt analyzer to support various operations of this disclosure. For example, the prompt analyzer may receive an input (e.g., an image received from the one or more cameras 115 of the sensing system 110) and generate one or more intermediate prompts to the generative AI model 330A-N to determine what type of data the generative AI model may need to successfully respond to the input. Upon receiving a response from the generative AI model 330A-N, the prompt analyzer may analyze the response, form a request for relevant contextual data from the passenger detection subsystem 130. The prompt analyzer may then generate a prompt to the generative AI model 330A-N that includes the original prompt and the contextual data. In some embodiments, the prompt analyzer may, itself, include a lightweight generative AI model that may process the intermediate prompt(s) and determine what type of contextual data may be needed by the generative AI model 330A-N together with the original prompt to ensure a meaningful response from generative AI model 330A-N.

The prompt subsystem may include (or may have access to) instructions stored on one or more tangible, machine-readable storage media of a computing device and executable by one or more processing devices of the computing device. In one embodiment, the prompt subsystem may be implemented on a single machine. In some embodiments, the prompt subsystem may be a combination of a client component and a server component.

In some implementations, the trained AI models 330A-N may be provided to the AI subsystem 138 of the AV 100. For example, the AI training system 300 may be in data communication with the AV 100 over a data network. The passenger detection subsystem 130 may use the one or more AI models 330A-N to detect one or more passengers of the AV 100, as discussed herein. The AI subsystem 138 may include an input/output component 340 configured to feed data as input to an AI model 330A-N and obtain one or more outputs. For example, for an AI model 330A-N used by the location subsystem 132, the input/output component 340 can feed one or more images from the camera(s) 115 as input to the AI model 330A-N and obtain one or more outputs from the AI model 330A-N, which may indicate whether the one or more images include an image of a passenger, and if so, where the passenger is located, as described herein. The input/output component 340 may be further configured to provide the one or more outputs to a component of the AV 100 (e.g., a component of the passenger detection subsystem 130).

Returning to **FIG. 2****,** in one implementation, the passenger detection subsystem 130 may obtain the one or more images from the camera(s) of the sensing system 110. The passenger detection subsystem 130 may provide the one or more images from the one or more cameras 115 to the location subsystem 132. The location subsystem 132 may provide the one or more images to the input/output component 340 of the AI subsystem 138. The input/output component 340 may provide the one or more images to one or more AI models 330A-N as input. The one or more AI models 330A-N may generate passenger data based on the one or more images. The passenger data may indicate one or more locations of one or more passengers of the AV 100. The input/output component 340 may obtain the passenger data and provide it to the location subsystem 132.

In some implementations, using the one or more AI models 330A-N and the one or more images may include using a panoramic image as input to the one or more AI models. In one implementation, using the one or more AI models 330A-N and the one or more images may include generating one or more embeddings based on the one or more images and using the one or more embeddings as input to the one or more AI models 330A-N. An embedding may include a digital representation of the corresponding image or images. The digital representation may include a vector, e.g., a vector of floats. In some embodiments, the passenger detection subsystem 130, the location subsystem 132, the AI subsystem 138, or some other system of the AV 100 may perform a compression operation on the vector. In some embodiments, the vector may include a large number of floats (e.g., hundreds or thousands of floats). Compressing the vector to reduce the number of floats or otherwise reduce the size of the vector may result in the AI model 330A-N that processes the embedding using fewer computing resources versus using an uncompressed vector.

In some implementations, generating an embedding based on the one or more images may include generating an embedding for each image of the one or more images. In one implementation, generating an embedding based on the one or more images may include generating a single embedding based on all of the images of the one or more images. Generating an embedding based on the one or more images may include generating an embedding based on the panoramic image.

In one or more implementations, the one or more AI models 330A-N may represent a single AI model 330A. Where the one or more images include a single image, the AI model 330A may receive the single image from the input/output component 340, process the image to generate the passenger data, and provide the passenger data to the input/output component 340. In an implementation where the one or more images include multiple images, the AI model 330A may receive the images one at a time and generate passenger data for each image. The input/output component 340 may combine the different pieces of passenger data into the passenger data and provide the passenger data to the location subsystem 132.

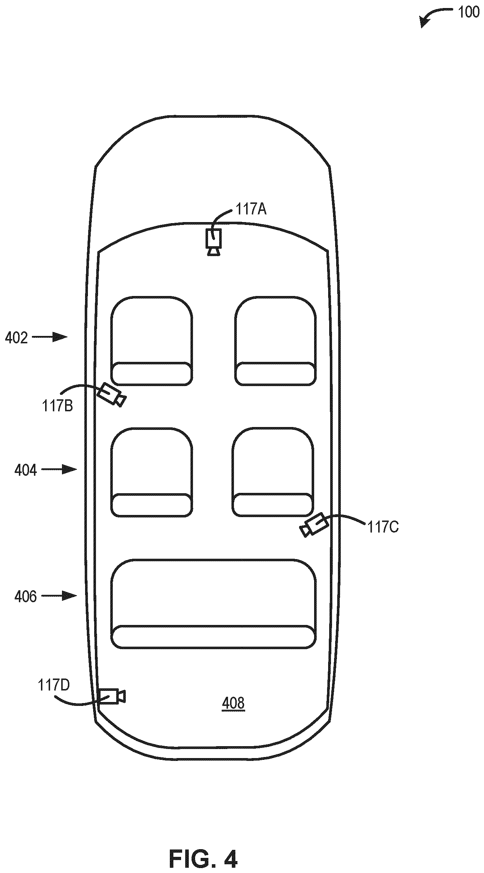

In some implementations, the one or more AI models 330A-N may represent multiple AI models 330A-N. In one implementation, each AI model 330A-N may correspond to a camera 115 of the one or more cameras 115. The respective AI model 330A-N may be trained on training data that includes an image captured from the viewpoint or position of the camera 115 that corresponds to the respective AI model 330A-N. As discussed above, cameras 115 may include one or more external cameras 116 and one or more internal cameras 117, which will be discussed in more detail below in conjunction with **FIG. 4****.**

**FIG. 4** depicts an example AV 100, according to some implementations of the present disclosure. The AV 100 may include a first row of seats 402 (e.g., a driver seat and a front passenger seat), a second row of seats 404 (e.g., a row of captain chairs), a third row of seats 406 (e.g., a back row bench), and a storage area 408 (e.g., a trunk). The AV 100 may include a first internal camera 117A, which may be mounted to a top middle portion of the windshield and faces toward the rear of the AV 100. The AV 100 may include a second internal camera 117B, which may be mounted to the interior roof of the right side of the AV 100 between the first row 402 and the second row 404. The AV 100 may include a third internal camera 117C, which may be mounted to the interior roof of the left side of the AV 100 between the second row 404 and the third row 406. The AV 100 may include a fourth internal camera 117D mounted to an interior wall of the AV 100 in the storage area 408 and facing the interior of the storage area 408.

In some implementations, a first AI model 330A may correspond to the first internal camera 117A. The first AI model 330A may be trained on training data that includes images captured from a camera in a similar location and orientation as the first internal camera 117A. The first AI model 330A may receive an image captured by the first internal camera 117A. A second AI model 330B may correspond to the second internal camera 117B. The second AI model 330B may be trained on training data that includes images captured from a camera in a similar location and orientation as the second internal camera 117B. The second AI model 330B may receive an image captured by the second internal camera 117B. A third AI model 330C may correspond to the third internal camera 117C. The third AI model 330C may be trained on training data that includes images captured from a camera in a similar location and orientation as the third internal camera 117C. The third AI model 330C may receive an image captured by the third internal camera 117C. A fourth AI model 330D may correspond to the fourth internal camera 117D. The fourth AI model 330D may be trained on training data that includes images captured from a camera in a similar location and orientation as the fourth internal camera 117D. The fourth AI model 330D may receive an image captured by the fourth internal camera 117D.

Returning to **FIG. 2****,** as discussed above, an AI model 330A-N may generate an output in response to processing an image from a camera 115, and the location subsystem 132 may generate passenger data based on the output. In one implementation, the passenger data may indicate whether the image contains one or more images of one or more passengers. In some implementations, where the image contains one or more images of one or more passengers, the passenger data may indicate one or more locations of the one or more passengers. Data indicating a location of a passenger may include data describing a bounding box that contains at least a portion of the image of the passenger in the input image (e.g., data indicating the dimensions of the box, data indicating a position of the box, data indicating a size of the box, etc.). The bounding box may include a two-dimensional box or a three-dimensional box. In one or more implementations, for each location of a passenger, the passenger data may include a confidence score. The confidence score may include a metric produced by the AI model 330A-N indicating a level of confidence of the AI model 330A-N that the location includes a passenger.

In one embodiment, where the AI model 330A-N includes a generative AI model 330A-N, the input to the AI model 330A-N may include a prompt that includes the one or more images from the one or more cameras 115. The prompt may include a command to the AI model 330A-N to determine whether an image of the one or more images from the cameras 115 contains one or more passengers. The prompt may include an image of the vehicle (e.g., an image similar **FIG. 4****),** and the prompt may further command the AI model 330A-N to determine which locations in the vehicle where the one or more passengers are located. The generative AI model 330A-N may process the prompt and output the passenger data, which may include the location of one or more passengers in the vehicle.

At block 230, processing logic generates vehicle area data. The vehicle area data may indicate one or more areas of the vehicle at which the one or more passengers are located. Generating the vehicle area data may be based on the passenger data of block 220. In one implementation, the vehicle area subsystem 134 may perform block 230.

In some implementations, the one or more areas of the vehicle may include one or more seats of the vehicle (e.g., the seats of the first row 402, second row 404, or third row 406 of the AV 100 of **FIG. 4****).** A seat of the vehicle may include an area of the vehicle designated as a place where a passenger may sit during operation of the vehicle. The one or more areas of the vehicle may include a floor of the vehicle. The floor may include an area of the vehicle where passengers walk or stand (e.g., in between the seats of the vehicle). The one or more areas of the vehicle may include a storage area of the vehicle (e.g., the storage area 408 of the AV 100 of **FIG. 4****).** A storage area may include an area of the vehicle designated to hold luggage or other objects, but not designated as a place where a passenger may be located during operation of the vehicle. A storage area may include a trunk of the vehicle, a truck bed of the vehicle, or the like. The one or more areas of the vehicle may include an exterior of the vehicle. The exterior of the vehicle may include a side of the vehicle, a rear of the vehicle, the roof of the vehicle, or the like.

In some embodiments, the vehicle area subsystem 134 may receive the passenger data from the location subsystem 132. The vehicle area subsystem 134 may provide the passenger data to the AI subsystem 138, and the AI subsystem 138 may use one or more AI models 330A-N to generate an output based on the passenger data. The AI subsystem 138 may provide the output to the vehicle area subsystem 134, which may generate the vehicle area data.

In some implementations, an AI model 330A-N may use, as input, passenger data and may output one or more areas of the vehicle at which one or more passengers are located. The AI model 330A-N may be trained on training data. The training data may include data similar to the passenger data and a corresponding ground truth that includes data indicating one or more areas at which one or more passengers indicated by the passenger data are located. In some implementations, where the passenger data indicates an absence of passengers, the AI model 330A-N may output vehicle area data not indicating an area of the vehicle, or the AI model 330A-N may not execute on such passenger data. In one or more implementations, the passenger data may further include the one or more images of the camera(s) 115. The one or more AI models 330A-N may use the data indicated in the passenger data and the one or more images to generate an output.

In one embodiment, generating the vehicle area data based on the passenger data may include determining a location of a passenger of the one or more passengers. Determining a location of a passenger may include determining a location in the vehicle where the passenger is located. Generating the vehicle area data based on the passenger data may further include determining whether the location of the passenger corresponds to an area of the vehicle. Each area of the vehicle may include location data indicating where in the vehicle the area is located. If the passenger location corresponds to the location of the area of the vehicle, the vehicle area data may indicate that the passenger is located in the area of the vehicle. In one embodiment, where an AI model 330A-N includes a generative AI model 330A-N, the vehicle area subsystem 134 may provide a prompt to the generative AI model 330A-N, and the prompt may include an image of the passenger, an image of the location of the area of the vehicle, and text asking the generative AI model 330A-N whether the passenger is located in that location. The output of the generative AI model 330A-N may indicate whether the passenger is located in that location.

Determining that the passenger location corresponds to the location of the area of the vehicle may include determining whether the location of the passenger overlaps above a threshold amount with the location of the area of the vehicle. For example, an AI model 330A-N may determine, based on the passenger data, that 80% of the location of the passenger overlaps with a first seat, and 20% of the location of the passenger overlaps with the floor. The threshold amount may include 75%. Since the location of the passenger exceeds the threshold amount, the vehicle area subsystem 134 may determine that the passenger is located in the first seat and may generate vehicle area data based on the determination.

In some implementations, determining that the passenger location corresponds to the location of the area of the vehicle may include determining whether the passenger is positioned in a predetermined position or orientation. For example, the vehicle area subsystem 134 may determine that a passenger's hips are not located within an area of the vehicle and are not directly above a seating area of a seat of the vehicle (which may indicate that the passenger is not properly seated). The vehicle area subsystem 134 may determine that a passenger is sitting, standing, kneeling, lying down, or in some other position. The vehicle area subsystem 134 may determine that a passenger is not facing toward the front of the vehicle (e.g., the passenger's body is rotated 90 degrees in a chair) or that a passenger is leaning out of the area of the vehicle. Responsive to the passenger being in a predetermined position, the vehicle area subsystem 134 may determine that the passenger location does not correspond to the location of the area of the vehicle. Where an AI model 330A-N includes a generative AI model 330A-N, the vehicle area subsystem 134 may provide a prompt to the generative AI model 330A-N, and the prompt may include an image of the passenger and text asking if the passenger is in a predetermined position or orientation. The output of the generative AI model 330A-N may include data indicating whether the passenger is in the predetermined position or orientation.

In some implementations, the location subsystem 132 or the vehicle area subsystem 134 (or an AI model 330A-N used by one or more of these subsystems 132, 134) may determine whether a passenger is a child or an adult. Determining whether a passenger is a child may include determining whether the passenger is an infant, toddler, young child, preteen, teenager, or in some other age group. Where an AI model 330A-N includes a generative AI model 330A-N, the vehicle area subsystem 134 may provide a prompt to the generative AI model 330A-N, and the prompt may include an image of the passenger and text asking if the passenger is a child or an adult or text commanding the generative AI model to determine the age of the passenger. In one or more implementations, the location subsystem 132 or the vehicle area subsystem 134 (or an AI model 330A-N used by one or more of these subsystems 132, 134) may determine whether a passenger is engaged in a predetermined activity. The predetermined activity may include smoking, using an electronic cigarette, or is engaged in some other activity. For example, an AI model 330A-N may be trained on images of passengers of various ages or images of passengers engaged in various activities. Where an AI model 330A-N includes a generative AI model 330AN, the vehicle area subsystem 134 may provide a prompt to the generative AI model 330A-N, and the prompt may include an image of the passenger and text asking if the passenger is engaged in a predetermined activity.

At block 240, processing logic determines whether at least one passenger seating configuration criterion is satisfied. The determination may be based on the passenger data or the vehicle area data. In some implementations, the passenger seating subsystem 136 may perform block 240.

The passenger seating subsystem 136, in one or more implementations, may receive the passenger data or the vehicle area data from the location subsystem 132 or the vehicle area subsystem 134. The passenger seating subsystem 136 may determine whether the passenger data or the vehicle area data satisfy one or more passenger seating configuration criteria.

In one implementation, a passenger seating configuration criterion may include a first passenger of the one or more passengers being located in a first seat of the vehicle and the seatbelt data of the vehicle indicating that a seatbelt of the first seat is not buckled. The seatbelt data of the vehicle may include data produced by the vehicle indicating a status of a certain seatbelt (e.g., unbuckled, buckled, etc.). A seatbelt assembly of the vehicle may include one or more sensors that can detect whether the buckle of a seatbelt is within the seatbelt receptacle, and the seatbelt assembly may provide data indicating a status of the seatbelt to the vehicle (e.g., the data processing system 120).

In some implementations, a passenger seating configuration criterion may include multiple passengers of the one or more passengers being located in a first seat of the vehicle. For example, the vehicle area data may indicate that a first passenger is located in a first seat, and the vehicle area data may also indicate that a second passenger is located in that same first seat.

In one or more implementations, a passenger seating configuration criterion may include a first passenger being located in a first area of the vehicle and the first area not being a seat of the vehicle. For example, the vehicle area data may indicate that the first passenger is located in the storage area 408 of the AV 100 or in a truck bed of the AV 100. Such areas are not seats of the AV 100.

In some implementations, a passenger seating configuration criterion may include all of the one or more passengers being children. For example, the vehicle area data may indicate that the vehicle includes three passengers and that all three passengers are children. In one or more implementations, a passenger seating configuration criterion may include a first passenger being a child and the first passenger not being seated in a child safety seat. In some implementations, the vehicle area data may include data indicating whether a passenger is seated in a child safety seat. In some implementations, a passenger seating configuration criterion may include a first passenger of the vehicle being a child and the first passenger being located in a predetermined seat of the vehicle. The predetermined seat may include a seat in the first row 402 of the vehicle, a driver's seat, a front passenger seat, or some other seat.

In one implementation, a passenger seating configuration criterion may include a passenger of the one or more passengers smoking or using an e-cigarette. For example, the vehicle area data may indicate that the passenger is smoking or using an e-cigarette. A passenger seating configuration criterion may include a passenger engaging in another predetermined activity.

In some embodiments, where an AI model 330A-N includes a generative AI model 330A-N, the passenger seating subsystem 136 may provide a prompt to the generative AI model 330A-N. The prompt may include the one or more one passenger seating configuration criterion, the passenger data or the vehicle area data, and text asking if at least one passenger seating configuration criterion is satisfied based on the passenger data or vehicle data. The output of the generative AI model 330A-N may indicate whether the generative AI model 330A-N determined that at least one passenger seating configuration criterion is satisfied.

At block 250, responsive to determining that the at least one passenger seating configuration criterion is satisfied in block 240, processing logic causes the vehicle to perform an action associated with a passenger seating configuration in the vehicle. An action associated with a passenger seating configuration in the vehicle may include producing a passenger alert. A passenger alert may include one or more visual or auditory indications configured to provide the one or more passengers with information indicating that the seating configuration of the passengers is invalid.

In some implementations, the passenger alert may include a visual alert. The visual alert may include an icon. The icon may include a symbol corresponding to the satisfied criterion/criteria. The visual alert may include a displayed string of text data corresponding to the satisfied criterion/criteria. The illuminated icon may include a visual representation of the vehicle and an indication of where in the vehicle the satisfied criterion/criteria is occurring. In one or more implementations, the passenger alert may include an auditory alert. The auditory alert may include a sound produced by a speaker of the vehicle. The sound may include a beeping, a tone, or some other sound. The auditory alert may include speech providing information about the satisfied criterion/criteria.

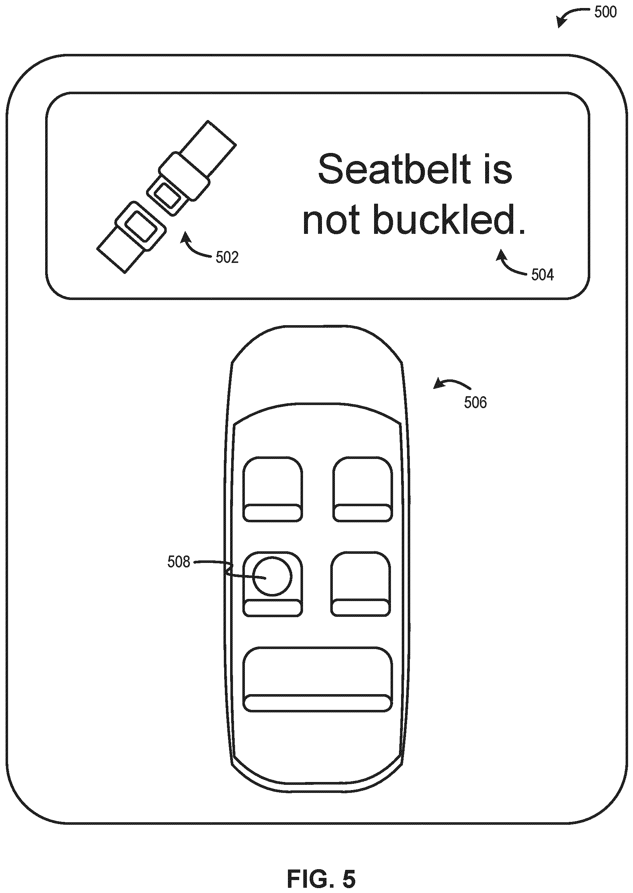

**FIG. 5** depicts an example visual alert 500, in accordance with some of the implementations of the present disclosure. The visual alert 500 may appear on a screen of the dashboard of the AV 100. In response to the passenger seating subsystem 136 (1) determining, from the vehicle area data, that a passenger is located in the left seat of the second row 404 of the AV 100, and (2) determining that the seat belt of the left seat of the second row 404 is not buckled, the passenger seating subsystem 136 may produce a passenger alert. The passenger alert may include, in the visual alert 500, an icon 502 of a seatbelt, text 504, which may read, "Seatbelt is not buckled," and a visual representation 506 of the AV 100 (e.g., similar to **FIG. 4****)** with another icon 508 appearing over the left seat of the second row 404. The passenger alert may include the speakers of the AV 100 producing audio speech saying, "Seatbelt is not buckled."

As another example, in response to the passenger seating subsystem 136 determining from the vehicle area data, that a passenger is located in the storage area 408 of the AV 100, the passenger seating subsystem 136 may produce a passenger alert. The passenger alert may include the text 504, "A passenger is not in a vehicle seat" and a visual representation 506 of the AV 100 with an icon 508 appearing in the storage area 408. The passenger alert may include the speakers of the AV 100 producing audio speech saying, "A passenger is not in a vehicle seat."

Returning to **FIG. 2****,** at block 250, performing the action associated with a passenger seating configuration in the vehicle may include autonomously modifying the operation of the AV 100. Autonomously modifying the operation of the AV 100 may include causing the AVCS 140 to prevent the AV 100 from driving. For example, before the AV 100 has begun to autonomously drive, the passenger seating subsystem 136 may determine a passenger seating configuration criterion is satisfied and may provide an indication to the AVCS 140, and the AVCS 140 may not operate the powertrain, brakes, or steering 150. The one or more passengers of the AV 100 may reconfigure themselves such that the passenger seating configuration criterion is no longer satisfied. The passenger seating subsystem 136 may determine that none of the one or more passenger seating configuration criteria is satisfied and may provide another indication to the AVCS 140. The AVCS 140 may then operate the powertrain, brakes, or steering 150 to drive the AV 100.

In one implementation, the AV 100 may already be driving when the passenger seating subsystem 136 determines that a passenger seating configuration criterion is satisfied. Thus, autonomously modifying the operation of the AV 100 may include causing the AV 100 to stop. The AV 100 stopping may include the AV 100 pulling over from the road and coming to a stop. For example, while the AV 100 is driving, a passenger may unbuckle the passenger's seatbelt. The passenger seating subsystem 136 may determine, from the vehicle area data and the seatbelt data, that the passenger is located in a specific seat and that the seatbelt of that seat is unbuckled. The passenger seating subsystem 136 may send an indication to the AVCS 140, and the AVCS 140 may operate the powertrain, brakes, or steering 150 to pull the AV 100 to a side of the road, slow down, and stop.

In some implementations, the AVCS 140 may not immediately prevent the AV 100 from driving or stop the AV 100 responsive to receiving an indication from the passenger seating subsystem 136. The AVCS 140 may wait a predetermined amount of time before preventing the AV 100 from driving or stopping the AV 100. This may allow the one or more passengers to rectify behavior that may be causing the passenger seating configuration criterion to be satisfied before the AVCS 140 takes action.

In some embodiments, responsive to determining that the at least one passenger seating configuration criterion is not satisfied in block 240, processing logic returns to block 210, and the method 200 may be performed again using one or more different images captured by the one or more cameras 115. The one or more different images may include one or more images captured by the one or more cameras 115 at a later time than the one or more images of the first iteration of block 210. In some implementations, performance of the method 200 may be repeated at a predetermined interval (e.g., every second, every 5 seconds, every 10 seconds, etc.). In some implementations, performance of the method 200 may be repeated while the vehicle is on, driving, or otherwise operating.

As discussed above, in some implementations, the location subsystem 132 may use multiple AI models 330A-N to determine one or more locations of one or more passengers of the vehicle. The location subsystem 132 may provide each image of the one or more images to a different AI model 330A-N, and each AI model 330A-N may generate an output, which may indicate a location of a passenger. In some implementations, different images may show some of the same locations of the vehicle. For example, in **FIG. 4****,** an image captured by the first internal camera 117A may show, among other areas, the middle seat of the third row 406, and the third internal camera 117C may also show, among other areas, the middle seat of the third row 406. In one or more implementations, the outputs of different AI models 330A-N that process these images may conflict. For example, a first AI model's 330A output may indicate that a passenger is located in the middle seat of the third row 406, and a second AI model's 330B output may indicate that a passenger is not located in the middle seat of the third row 406. In some implementations, the vehicle area subsystem 134 may determine which passenger data to use.

In some implementations, the passenger data may include first passenger data generated by a first AI model 330A. The first passenger data may indicate that a first location of the one or more locations of the vehicle includes a passenger of the one or more passengers. The passenger data may further include second passenger data generated by a second AI model 330B. The second passenger data may indicate that the first location does not include a passenger. Each of the first passenger data and the second passenger data may include a respective confidence score generated by the respective AI model 330A, 330B. The confidence score may include a metric indicating a level of confidence of the AI model in its determination of whether the first location includes a passenger. The location subsystem 132 may provide the passenger data to the vehicle area subsystem 134. The vehicle area subsystem 134 may determine that the confidence score of the first passenger data is higher than the confidence score of the second passenger data. In response, the vehicle area subsystem 134 may use the first passenger data to generate vehicle area data associated with the first location. In some implementations, the vehicle area subsystem 134 may disregard the second passenger data associated with the first location but may use the second passenger data associated with other locations of the vehicle.

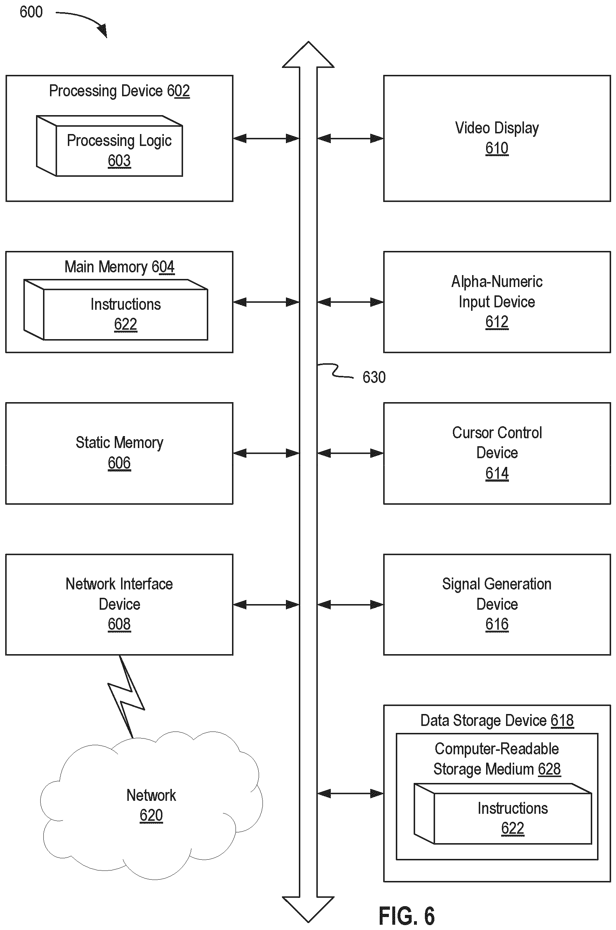

**FIG. 6** depicts a block diagram of an example computer device 600 capable of using AI to detect passengers in a vehicle, in accordance with some implementations of the present disclosure. The example computer device 600 can be connected to other computer devices in a local area network (LAN), an intranet, an extranet, and/or the Internet. The computer device 600 can operate in the capacity of a server in a client-server network environment. The computer device 800 can be a personal computer (PC), a set-top box (STB), a server, a network router, switch or bridge, or any device capable of executing a set of instructions (sequential or otherwise) that specify actions to be taken by that device. Further, while only a single example computer device is illustrated, the term "computer" shall also be taken to include any collection of computers that individually or jointly execute a set (or multiple sets) of instructions to perform any one or more of the methods discussed herein.

The example computer device 600 can include a processing device 602 (also referred to as a processor or CPU), a main memory 604 (e.g., read-only memory (ROM), flash memory, dynamic random access memory (DRAM) such as synchronous DRAM (SDRAM), etc.), a static memory 606 (e.g., flash memory, static random access memory (SRAM), etc.), and a secondary memory (e.g., a data storage device 618), which can communicate with each other via a bus 630.

The processing device 602 (which can include processing logic 603) represents one or more general-purpose processing devices such as a microprocessor, CPU, or the like. More particularly, the processing device 602 can be a complex instruction set computing (CISC) microprocessor, reduced instruction set computing (RISC) microprocessor, very long instruction word (VLIW) microprocessor, processor implementing other instruction sets, or processors implementing a combination of instruction sets. The processing device 602 can also be one or more special-purpose processing devices such as a GPU, an application specific integrated circuit (ASIC), a field programmable gate array (FPGA), a digital signal processor (DSP), network processor, or the like. In accordance with one or more aspects of the present disclosure, the processing device 602 can be configured to execute instructions performing methods, such as the method 200, for using AI to detect passengers in a vehicle.

The example computer device 600 can further comprise a network interface device 608, which can be communicatively coupled to a network 620. A network interface device 608 may include a network card, a network interface controller, or some other network interface. The network 620 may include a local area network (LAN), an intranet, an extranet, the Internet, a modem, a router, a switch, or some other network or network device. In some embodiments, the computer device 600 may be in data communication with other systems or device over the network 620. The example computer device 600 can further comprise a video display 610 (e.g., a liquid crystal display (LCD), a touch screen, or a cathode ray tube (CRT)), an alphanumeric input device 612 (e.g., a keyboard), a cursor control device 614 (e.g., a mouse), and an acoustic signal generation device 616 (e.g., a speaker).

A data storage device 618 can include a computer-readable storage medium (or, more specifically, a non-transitory computer-readable storage medium) 628 on which is stored one or more sets of executable instructions 622. In accordance with one or more aspects of the present disclosure, executable instructions 622 can comprise executable instructions performing the method 200.

The executable instructions 622 can also reside, completely or at least partially, within the main memory 604 and/or within the processing device 602 during execution thereof by the example computer device 600, main memory 604 and processing device 602 also constituting computer-readable storage media. Executable instructions 622 can further be transmitted or received over a network via the network interface device 608.

While the computer-readable storage medium 628 is shown in **FIG. 6** as a single medium, the term "computer-readable storage medium" should be taken to include a single medium or multiple media (e.g., a centralized or distributed database, and/or associated caches and servers) that store the one or more sets of operating instructions. The term "computer-readable storage medium" shall also be taken to include any medium that is capable of storing or encoding a set of instructions for execution by the machine that cause the machine to perform any one or more of the methods described herein. The term "computer-readable storage medium" shall accordingly be taken to include, but not be limited to, solid-state memories, and optical and magnetic media.

In some cases, certain components of the AV 100 (e.g., the sensing system 110, the data processing system 120, the AVCS 140, or other components) may include a computer device 600.

In some implementations, certain components of the AV 100-such as the passenger detection subsystem 130, the location subsystem 132, the vehicle area subsystem 134, the passenger seating subsystem, or the AI subsystem 138-may be implemented on a computer device 600 that is external from the AV 100. The AV 100 may provide data to the computer device 600 over the network 620, the components may perform the method 200, and the computer device 600 may provide data to the AV 100 over the network 620. The computer device 600 may include a server. In one implementation, at block 210 of the method 200, obtaining the one or more images captured by the one or more cameras 115 may include the sensing system 110 or the data processing system 120 of the AV 100 providing the one or more images over the network 620 to a server that is external from the AV 100. The computer device 600 may receive the one or more images and provide them to the passenger detection subsystem 130 executing on the server. The passenger detection subsystem 130, executing on the server may perform the method 200 as discussed herein. At block 250, causing the AV 100 to perform an action associated with the passenger seating configuration in the AV 100 may include the server sending data to the AV 100, and responsive to processing the data, the data processing system 120 may send a command to the AVCS 140 to produce a passenger alert, autonomously modify the operation of the AV 100, or perform some other action, as discussed herein.

Some portions of the detailed descriptions above are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, as apparent from the following discussion, it is appreciated that throughout the description, discussions utilizing terms such as "identifying," "determining," "modifying," "storing," "adjusting," "causing," "returning," "comparing," "creating," "generating," "stopping," "causing," "loading," "copying," "replacing," "performing," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Examples of the present disclosure also relate to an apparatus for performing the methods described herein. This apparatus can be specially constructed for the required purposes, or it can be a general-purpose computer system selectively programmed by a computer program stored in the computer system. Such a computer program can be stored in a computer readable storage medium, such as, but not limited to, any type of disk including optical disks, CD-ROMs, and magnetic-optical disks, read-only memories (ROMs), random access memories (RAMs), EPROMs, EEPROMs, magnetic disk storage media, optical storage media, flash memory devices, other type of machine-accessible storage media, or any type of media suitable for storing electronic instructions, each coupled to a computer system bus.

The methods and displays presented herein are not inherently related to any particular computer or other apparatus. Various general-purpose systems can be used with programs in accordance with the teachings herein, or it may prove convenient to construct a more specialized apparatus to perform the required method steps. The required structure for a variety of these systems will appear as set forth in the description below. In addition, the scope of the present disclosure is not limited to any particular programming language. It will be appreciated that a variety of programming languages can be used to implement the teachings of the present disclosure.

Some examples that are in accordance with the subject matter described herein are set out below:
Example 1. A method, comprising:
   obtaining a plurality of images captured by a plurality of cameras of a vehicle;
   generating, using one or more artificial intelligence (AI) models and the plurality of images, passenger data indicating locations of one or more passengers of the vehicle;
   generating, based on the passenger data, vehicle area data indicating one or more areas of the vehicle at which the one or more passengers are located;
   determining, based on the passenger data and the vehicle area data, whether at least one passenger seating configuration criterion is satisfied; and
   responsive to determining that the at least one passenger seating configuration criterion is satisfied, causing the vehicle to perform an action associated with a passenger seating configuration in the vehicle.
Example 2. The method of example 1, wherein:
   the vehicle comprises an autonomous vehicle (AV); and
   the action associated with the passenger seating configuration in the vehicle comprises at least one of:
      producing a passenger alert based on the at least one passenger seating configuration criterion being satisfied, or
      autonomously modifying operation of the AV based on the at least one passenger seating configuration criterion being satisfied.
Example 3. The method of example 2, wherein autonomously modifying the operation of the AV comprises causing a control system of the AV to perform at least one of: preventing the AV from driving; or causing the AV to stop.
Example 4. The method of example 1, wherein using the one or more AI models and the plurality of images comprises at least one of: generating a panoramic image from the plurality of images and using the panoramic image as input to the one or more AI models; or generating an embedding based on the plurality of images and using the embedding as input to the one or more AI models.
Example 5. The method of example 1, wherein the one or more areas of the vehicle comprise: one or more seats of the vehicle; a floor of the vehicle; and a storage area of the vehicle.
Example 6. The method of example 1, wherein generating the vehicle area data based on the passenger data comprises:
   determining a location of a passenger of the one or more passengers; and
   determining whether the location of the passenger overlaps above a threshold amount with a location of an area of the one or more areas of the vehicle.
Example 7. The method of example 1, wherein the at least one passenger seating configuration criterion comprises at least one of:
   a first passenger of the one or more passengers being located in a first seat of the vehicle, and seatbelt data of the vehicle indicating that a seatbelt of the first seat is not buckled;
   a plurality of passengers of the one or more passengers being located in the first seat of the vehicle; or
   the first passenger being located in a first area of the one or more areas of the vehicle, and the first area not being a seat of the vehicle.
Example 8. The method of example 1, wherein the at least one passenger seating configuration criterion comprises at least one of:
   all of the one or more passengers being children;
   a first passenger of the one or more passengers being a child, and the first passenger not being seated in a child safety seat; or
   a second passenger of the one or more passengers smoking.
Example 9. A system, comprising: a memory; and a processing device, coupled to the memory, configured to perform operations comprising:
   obtaining a plurality of images captured by a plurality of cameras of a vehicle;
   generating, using one or more artificial intelligence (AI) models and the plurality of images, passenger data indicating locations of one or more passengers of the vehicle;
   generating, based on the passenger data, vehicle area data indicating one or more areas of the vehicle at which the one or more passengers are located;
   determining, based on the passenger data and the vehicle area data, whether at least one passenger seating configuration criterion is satisfied; and
   responsive to determining that the at least one passenger seating configuration criterion is satisfied, causing the vehicle to perform an action associated with a passenger seating configuration in the vehicle.
Example 10. The system of example 9, wherein:
   the vehicle comprises an autonomous vehicle (AV); and
   the action associated with the passenger seating configuration in the vehicle comprises at least one of:
      producing a passenger alert based on the at least one passenger seating configuration criterion being satisfied, or
      autonomously modifying operation of the AV based on the at least one passenger seating configuration criterion being satisfied.
Example 11. The system of example 10, wherein autonomously modifying the operation of the AV comprises causing a control system of the AV to perform at least one of: preventing the AV from driving; or causing the AV to stop.
Example 12. The system of example 9, wherein using the one or more AI models and the plurality of images comprises at least one of:
   generating a panoramic image from the plurality of images; or
   generating an embedding based on the plurality of images.
Example 13. The system of example 9, wherein the one or more areas of the vehicle comprise: one or more seats of the vehicle; a floor of the vehicle; and a storage area of the vehicle.
Example 14. The system of example 9, wherein generating the vehicle area data based on the passenger data comprises:
   determining a location of a passenger of the one or more passengers; and
   determining whether the location of the passenger overlaps above a threshold amount with a location of an area of the one or more areas of the vehicle.
Example 15. The system of example 9, wherein the at least one passenger seating configuration criterion comprises at least one of:
   a first passenger of the one or more passengers being located in a first seat of the vehicle, and seatbelt data from the vehicle indicating that a seatbelt of the first seat is not buckled;
   a plurality of passengers of the one or more passengers being located in the first seat of the vehicle; or
   the first passenger being located in a first area of the one or more areas of the vehicle, and the first area not being a seat of the vehicle.
Example 16. The system of example 9, wherein the at least one passenger seating configuration criterion comprises at least one of:
   all of the one or more passengers being children;
   a first passenger of the one or more passengers being a child, and the first passenger not being located in a child safety seat; or
   a second passenger of the one or more passengers smoking.
Example 17. A non-transitory computer-readable medium storing instructions that, when executed by one or more processing devices, cause the one or more processing devices to perform operations comprising:
   obtaining a plurality of images captured by a plurality of cameras of a vehicle;
   generating, using one or more artificial intelligence (AI) models and the plurality of images, passenger data indicating locations of one or more passengers of the vehicle;
   generating, based on the passenger data, vehicle area data indicating one or more areas of the vehicle at which the one or more passengers are located;
   determining, based on the passenger data and the vehicle area data, whether at least one passenger seating configuration criterion is satisfied; and
   responsive to determining that the at least one passenger seating configuration criterion is satisfied, causing the vehicle to perform an action associated with a passenger seating configuration in the vehicle.
Example 18. The computer-readable medium of example 17, wherein the passenger data comprises, for each location of the one or more locations of the one or more passengers, a confidence score.
Example 19. The computer-readable medium of example 18, wherein:
   the passenger data comprises first passenger data generated by a first AI model of the one or more AI models, wherein the first passenger data indicates that a first location of the one or more location of the vehicle includes a passenger of the one or more passengers;
   the passenger data further comprises second passenger data generated by a second AI model of the one or more AI models, wherein the second passenger data indicates that the first location does not include a passenger of the one or more passengers;
   the operations further comprise determining that the confidence score of the first passenger data is higher than the confidence score of the second passenger data; and
   generating the vehicle area data is based on the first passenger data.
Example 20. The computer-readable medium of example 17, wherein:
   the vehicle comprises an autonomous vehicle (AV); and
   the action associated with the passenger seating configuration in the vehicle comprises at least one of:
      producing a passenger alert based on the at least one passenger seating configuration criterion being satisfied, or
      autonomously modifying operation of the AV based on the at least one passenger seating configuration criterion being satisfied.

It is to be understood that the above description is intended to be illustrative, and not restrictive. Many other implementation examples will be apparent to those of skill in the art upon reading and understanding the above description. Although the present disclosure describes specific examples, it will be recognized that the systems and methods of the present disclosure are not limited to the examples described herein but can be practiced with modifications within the scope of the appended claims. Accordingly, the specification and drawings are to be regarded in an illustrative sense rather than a restrictive sense. The scope of the present disclosure should, therefore, be determined with reference to the appended claims, along with the full scope of equivalents to which such claims are entitled.

## Claims

1. A method, comprising:
obtaining a plurality of images captured by a plurality of cameras of a vehicle;
generating, using one or more artificial intelligence (AI) models and the plurality of images, passenger data indicating locations of one or more passengers of the vehicle;
generating, based on the passenger data, vehicle area data indicating one or more areas of the vehicle at which the one or more passengers are located;
determining, based on the passenger data and the vehicle area data, whether at least one passenger seating configuration criterion is satisfied; and
responsive to determining that the at least one passenger seating configuration criterion is satisfied, causing the vehicle to perform an action associated with a passenger seating configuration in the vehicle.

2. The method of claim 1, wherein:
the vehicle comprises an autonomous vehicle (AV); and
the action associated with the passenger seating configuration in the vehicle comprises at least one of:
producing a passenger alert based on the at least one passenger seating configuration criterion being satisfied, or
autonomously modifying operation of the AV based on the at least one passenger seating configuration criterion being satisfied.

3. The method of claim 2, wherein autonomously modifying the operation of the AV comprises causing a control system of the AV to perform at least one of:
preventing the AV from driving; or
causing the AV to stop.

4. The method of any preceding claim, wherein using the one or more AI models and the plurality of images comprises at least one of:
generating a panoramic image from the plurality of images and using the panoramic image as input to the one or more AI models; or
generating an embedding based on the plurality of images and using the embedding as input to the one or more AI models.

5. The method of any preceding claim, wherein the one or more areas of the vehicle comprise:
one or more seats of the vehicle;
a floor of the vehicle; and
a storage area of the vehicle.

6. The method of any preceding claim, wherein generating the vehicle area data based on the passenger data comprises:
determining a location of a passenger of the one or more passengers; and
determining whether the location of the passenger overlaps above a threshold amount with a location of an area of the one or more areas of the vehicle.

7. The method of any preceding claim, wherein the at least one passenger seating configuration criterion comprises at least one of:
a first passenger of the one or more passengers being located in a first seat of the vehicle, and seatbelt data of the vehicle indicating that a seatbelt of the first seat is not buckled;
a plurality of passengers of the one or more passengers being located in the first seat of the vehicle; or
the first passenger being located in a first area of the one or more areas of the vehicle, and the first area not being a seat of the vehicle.

8. The method of any of claims 1 to 6, wherein the at least one passenger seating configuration criterion comprises at least one of:
all of the one or more passengers being children;
a first passenger of the one or more passengers being a child, and the first passenger not being seated in a child safety seat; or
a second passenger of the one or more passengers smoking.

9. The method of any preceding claim, wherein the passenger data comprises, for each location of the one or more locations of the one or more passengers, a confidence score.

10. The method of claim 9, wherein:
the passenger data comprises first passenger data generated by a first AI model of the one or more AI models, wherein the first passenger data indicates that a first location of the one or more location of the vehicle includes a passenger of the one or more passengers;
the passenger data further comprises second passenger data generated by a second AI model of the one or more AI models, wherein the second passenger data indicates that the first location does not include a passenger of the one or more passengers;
the operations further comprise determining that the confidence score of the first passenger data is higher than the confidence score of the second passenger data; and
generating the vehicle area data is based on the first passenger data.

11. A system, comprising:
a memory; and
a processing device, coupled to the memory, configured to perform the method of any one of claims 1 to 10.

12. Computer-readable instructions that, when executed by one or more processing devices, cause the one or more processing devices to perform the method of any one of claims 1 to 10.
